# EUROPEAN PATENT SPECIFICATION

(11) **EP 4 378 363 B1**
(45) Date of publication and mention of the grant of the patent: **20.05.2026**
(21) Application number: 23210459.6
(22) Date of filing: 16.11.2023
(51) Int. Cl.: A47L 11/10, A47L 11/29

(54) **ON-BOARD INFORMATION DISPLAY**
BORDINFORMATIONSANZEIGE
AFFICHAGE D'INFORMATIONS EMBARQUÉ

(30) Priority: 01.12.2022 US 202263429395 P
(43) Date of publication of application: 05.06.2024
(73) Proprietor: Nilfisk A/S, 2100 Copenhagen Ø (DK)
(72) Inventor: Matthaios, Alexandros, 3550 Slangerup (DK)
(74) Representative: Larsen & Birkeholm A/S

(56) References cited:
- EP-A1- 3 392 738
- US-A1- 2012 316 676
- US-A1- 2022 265 110

## Description

### Technical field of the invention

The present disclosure generally relates to cleaning machines. In particular, the present disclosure relates to displaying information and/or images on a cleaning machine.

### Background of the invention

Industrial and commercial floors are cleaned on a regular basis for aesthetic and sanitary purposes. There are many types of industrial and commercial floors ranging from hard surfaces such as concrete, terrazzo, wood, and the like, which can be found in factories, schools, hospitals, and the like, to softer surfaces such as carpeted floors found in restaurants and offices. Different types of floor cleaning equipment such as vacuums, scrubbers, sweepers, and extractors, have been developed to properly clean and maintain these different floor surfaces.

Existing cleaning machines are seen by some as visual disturbance or points of annoyance as the cleaning machine passes by. For example, some existing cleaning machines lack features providing for visual engagement with passers-by.

EP3392738A1 discloses a method for operating an unmanned vehicle, in particular a cleaning robot, that is moving autonomously within an environment, wherein the vehicle detects obstacles and/or persons located within the surroundings, wherein a user receives information that is displayed on a display of the vehicle, which is usually oriented horizontally relative to a display plane during operation of the vehicle. In order to always allow a user of the vehicle optimal readability of the information, it is proposed that upon detection of a presence of a user a spatial position of the user relative to the vehicle is determined and an orientation of the displayed information in dependence on the determined spatial position of the user is varied.

### Summary of the invention

A method of operating a cleaning machine can include determining a presence of a target group. An availability of content relevant to the target group can be determined. The content relevant to the target group can be displayed with a display of the cleaning machine.

A cleaning machine includes a sensor and a display. The sensor is connected to the cleaning machine and is configured to recognize an object and detect a person in a vicinity of the cleaning machine. The display is mounted to the cleaning machine and is disposed to show information to people in proximity to the cleaning machine.

A method of displaying content on a cleaning machine can include detecting a presence of a human. Whether there is emergency content to be shown can be determined. If there is emergency content to show, then the emergency content can be shown. If there is not emergency content to show, then an attention seeking mode can be enabled. A target group can be determined. Whether content relevant to the determined target group is available can be determined. Content relevant to the determined target group can be shown in response to the availability of content relevant to the determined target group.

### Brief description of the figures

FIG. 1 is a perspective view of a first cleaning machine with front and side displays.
FIG. 2 is a perspective view of a second cleaning machine with front and side displays.
FIG. 3 is a flowchart of a method of displaying content on a cleaning machine that is relevant to a target group.

### Detailed description of the invention

The present inventors have recognized, among other things, that an area of improvement with existing cleaning machines is the low level of engagement with people passing by the cleaning machine as the cleaning machine is in use. Cleaning areas with large amounts of people are cleaned with cleaning machines that are seen by many throughout the space.

The present disclosure provides an on-board display attached to a cleaning machine for displaying information to people such as people passing by the cleaning machine (or people the machine is passing by). The on-board display can show sponsored information and advertisements (e.g., marketing material) that can be curated based upon a target audience. In this way, instead of a cleaning machine being an "inconvenience" for surrounding people, the cleaning machine can add value to a cleaning machine customer and to the customers clients. With on-board information displays, cleaning machines can add value to the surrounding people and also create a new revenue stream for cleaning machine customers.

In view of the present disclosure, cleaning machines can provide revenue and/or reduce the lifetime cost for customers of the cleaning machine by showing sponsored information and advertisements on the displays of the cleaning machine.

A first aspect relates to a method of operating a cleaning machine comprising a display, wherein the method comprises:
- determining a presence of a target individual or a target group;
- determining an availability of content relevant to the target individual and/or target group; and
- displaying, with the display of the cleaning machine, the content relevant to the target individual and/or target group;
the method further comprising:
- classifying a bystander to be a specific type of target individual or part of a specific type of target group; and
- showing content with the display of the cleaning machine to the bystander based on the performed classification of the bystander.

In one or more embodiments, the method further comprises:
- determining if there is emergency information to show; and
- if so, showing the emergency information with the display of the cleaning machine.

In one or more embodiments, the method further comprises:
- sorting bystanders into different target groups;
- determining which target group to prioritize; and
- showing content, with the display of the cleaning machine, to the prioritized target group of bystanders.

In one or more embodiments, the method further comprises:
- collecting, with the cleaning machine, an image, a video, or a combination thereof;
- scanning, with an algorithm, the image, the video, or the combination thereof collected by the cleaning machine; and
- determining, with a processor, a type or a size of an object that is nearby the cleaning machine.

A second aspect relates to a cleaning machine comprising:
- a sensor connected to the cleaning machine, wherein the sensor is configured to recognize a target group, said target group comprising one or more persons;
- a database comprising content relevant to different target groups; and
- a display mounted to the cleaning machine;
- a processor or a processing unit operatively connected to the display, the processor or processing unit adapted for receiving data from the sensor about a recognized target group, said processor or a processing unit further configured for determining an availability of content relevant to the recognized target group and to present available content via said display;

wherein the sensor or processor is configured to classify a bystander to be a specific type of target individual or part of a specific type of target group; and
wherein the processor, based on the performed classification of the bystander, is configured to determine an availability of content relevant to the recognized target group and to present available content via said display.

In one or more embodiments, the display is mounted to the cleaning machine with a bracket, a slider, or a combination thereof.

In one or more embodiments, the display is connected to an alarm system.

In one or more embodiments, the cleaning machine further comprises a camera system configured to detect people in a vicinity of the cleaning machine.

In one or more embodiments, the display is connected to remote assistance.

In one or more embodiments, the display is connected to an online portal to enable remote control of information, an image, or a combination thereof displayed on the display.

A data processing component is integrated into the cleaning machine. Such a data processing component is e.g., present to process sensor data to recognize a target group. The cleaning machine may, e.g., also comprise a data collection component to receive and collect sensor data from the sensor.

In general, for the different described data collection and processing components to operate, the data collection and processing components may comprise a computing system including a processor, a memory, a communication unit, an output device, an input device, and a data store, which may be communicatively coupled by a communication bus. The mentioned computing system should be understood as an example and that it may take other forms and include additional or fewer components without departing from the scope of the present disclosure. For instance, various components of the computing device may be coupled for communication using a variety of communication protocols and/or technologies including, for instance, communication buses, software communication mechanisms, computer networks, etc. The computing system may include various operating systems, sensors, additional processors, and other physical configurations. The processor, memory, communication unit, etc., are representative of one or more of these components. The processor may execute software instructions by performing various input, logical, and/or mathematical operations. The processor may have various computing architectures to method data signals (e.g., CISC, RISC, etc.). The processor may be physical and/or virtual and may include a single core or plurality of processing units and/or cores. The processor may be coupled to the memory via the bus to access data and instructions therefrom and store data therein. The bus may couple the processor to the other components of the computing system including, for example, the memory, the communication unit, the input device, the output device, and the data store. The memory may store and provide data access to the other components of the computing system. The memory may be included in a single computing device or a plurality of computing devices. The memory may store instructions and/or data that may be executed by the processor. For example, the memory may store instructions and data, including, for example, an operating system, hardware drivers, other software applications, databases, etc., which may implement the techniques described herein. The memory may be coupled to the bus for communication with the processor and the other components of computing system. The memory may include a non-transitory computer-usable (e.g., readable, writeable, etc.) medium, which can be any non-transitory apparatus or device that can contain, store, communicate, propagate, or transport instructions, data, computer programs, software, code, routines, etc., for processing by or in connection with the processor. In some implementations, the memory may include one or more of volatile memory and non-volatile memory (e.g., RAM, ROM, hard disk, optical disk, etc.). It should be understood that the memory may be a single device or may include multiple types of devices and configurations. The input device may include any device for inputting information into the computing system. In some implementations, the input device may include one or more peripheral devices. The output device may be any device capable of outputting information from the computing system. The data store may include information sources for storing and providing access to data. In some implementations, the data store may store data associated with a database management system (DBMS) operable on the computing system. For example, the DBMS could include a structured query language (SQL) DBMS, a NoSQL DMBS, various combinations thereof, etc. In some instances, the DBMS may store data in multi-dimensional tables comprised of rows and columns, and manipulate, e.g., insert, query, update and/or delete, rows of data using programmatic operations. The data stored by the data store may be organized and queried using various criteria including any type of data stored by them. The data store may include data tables, databases, or other organized collections of data. The data store may be included in the computing system or in another computing system and/or storage system distinct from but coupled to or accessible by the computing system. The data stores can include one or more non-transitory computer-readable mediums for storing the data. In some implementations, the data stores may be incorporated with the memory or may be distinct therefrom. The components may be communicatively coupled by the bus and/or the processor to one another and/or the other components of the computing system. In some implementations, the components may include computer logic (e.g., software logic, hardware logic, etc.) executable by the processor to provide their acts and/or functionality. These components may be adapted for cooperation and communication with the processor and the other components of the computing system.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

The following description is intended to be illustrative, and not restrictive. For example, the below-described examples (or one or more aspects thereof) may be used in combination with each other. Other embodiments can be used, such as by one of ordinary skill in the art upon reviewing the above description. Various features may be grouped together to streamline the disclosure. This should not be interpreted as intending that an unclaimed disclosed feature is essential to any claim. Rather, inventive subject matter may lie in less than all features of a particular disclosed embodiment. The scope of the disclosure should be determined with reference to the claims, along with the full scope of equivalents to which such claims are entitled.

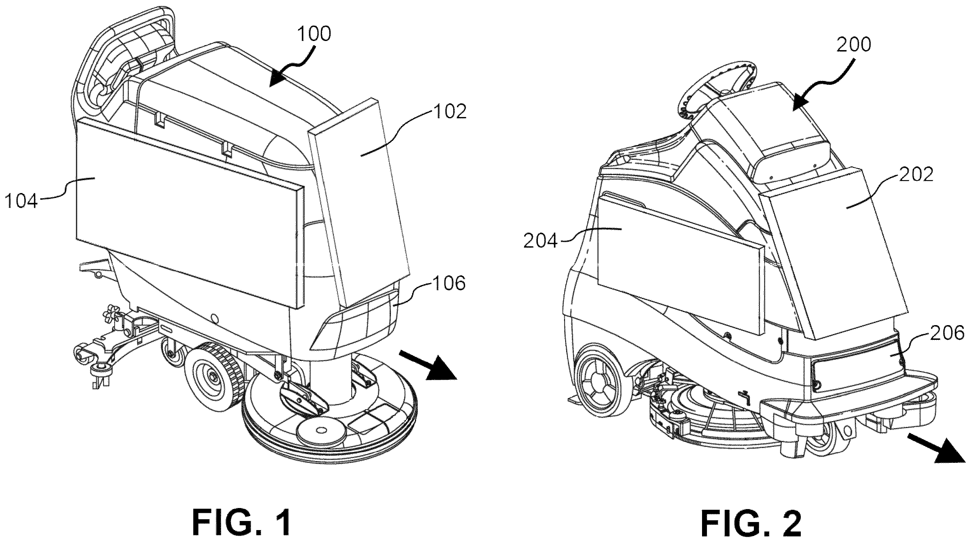

FIG. 1 is a perspective view of cleaning machine 100 with first display 102 and second display 104. In this embodiment, cleaning machine 100 includes two displays. In other embodiments, first display 102, second display 104, or a combination thereof can include a plurality of displays. As shown in FIG. 1, cleaning machine 100 can also include a sensor 106.

In an embodiment, the cleaning machine 100 can be a walk-behind type of machine configured to be operated by an operator. In other embodiments, the cleaning machine 100 can be a robotic or autonomous machine configured to be operated and/or driven without an operator in close proximity to cleaning machine 100.

The first display 102 can be mounted on a front of the cleaning machine 100. In an embodiment, the first display 102 can be mounted on the front of the cleaning machine 100 with fixed brackets, sliders, or a combination thereof to slide in a higher or lower position (e.g., a lower position for storage and a higher position during use of cleaning machine 100).

The second display 104 can be mounted on a side of cleaning machine 100. In an embodiment, the second display 104 can be mounted on the side of the cleaning machine 100 with fixed brackets, sliders, or a combination thereof to slide in a higher or lower position (e.g., a lower position for storage and a higher position during use of cleaning machine 100).

In an embodiment, the first display 102, second display 104, or a combination thereof can be disposed to rotate into a first vertical orientation, a second horizontal orientation, or any other angle along a range of 360°.

In an embodiment, the first display 102, second display 104, or a combination thereof can include one or more displays stacked vertically, horizontally, or a combination thereof. Additionally, or alternatively, horizontally or vertically configured sliders can be used to interchange and/or reposition display pieces.

In an embodiment, the first display 102, second display 104, or a combination thereof can include one or more flat screens, curved screens, or flexible screens that can wrap around a portion of cleaning machine 100.

In an embodiment, the first display 102, second display 104, or a combination thereof can include one or more physical ports, processors, transmitters, transceivers, and local storage devices, such as for use in areas without any wireless signal ability.

**In** an embodiment, the first display 102, second display 104, or a combination thereof can communicate directly, or via a component of cleaning machine 100, wirelessly to an external communication device. For an example, cleaning machine 100, first display 102, second display 104, or a combination thereof can connect to an online portal that will enable remote control of information, images, or a combination thereof displayed on first display 102, second display 104, or a combination thereof. Content can be "uploaded" to cleaning machine 100 locally or remotely through wireless technology or via an internet connection.

In another embodiment, a video or data feed can be streamed (e.g., a delayed stream or a live stream) can also be displayed on first display 102, second display 104, or a combination thereof. For example, communication with remote assistance can occur via first display 102, second display 104, or a combination thereof.

In an embodiment, the first display 102, second display 104, or a combination thereof can be connected to an alarm system, to a national emergency service (e.g., online, or wirelessly), or to private/public authorities to guide and instruct people in case of an emergency. For example, first display 102, second display 104, or a combination thereof can show an exit route, current developments, or any other information useful to the people in proximity to cleaning machine 100.

In another embodiment, information displayed upon first display 102, second display 104, or a combination thereof could be relevant to the operating site. For example, in a market or store, a portion of first display 102, second display 104, or a combination thereof can present current offers, and another portion can show commercials for products. Additionally, or alternatively, a themed message (e.g., seasonal, holiday, etc.) can also be displayed in connection with occurrences of celebrations such as religious holidays, national holidays, or the like.

In an embodiment, the first display 102, second display 104, or a combination thereof can be grouped by different criteria in the portal, such as by a geographical region that cleaning machine 100 operates in, target customer groups, or any other criteria or information assignable to a target audience.

In an embodiment, first display 102, second display 104, or a combination thereof can include one or more camera systems to detect and/or identify people in a vicinity of cleaning machine 100. For example, one or more camera systems can be integrated into first display 102, second display 104, or a combination thereof. Additionally, or alternatively, a camera can be externally mounted to the first display 102 or second display 104. Likewise, cameras or sensors of cleaning machine 100 can be used to detect and/or identify people in a vicinity of cleaning machine 100.

In an embodiment, a component of (e.g., sensor 106) or connected to cleaning machine 100 can be configured to recognize objects and characteristics of such objects. For example, a processor connected to cleaning machine 100 can utilize an algorithm to scan an image, a video, or a combination thereof collected by cleaning machine 100 to determine a type, size, or other characteristic of an object that is nearby cleaning machine 100. In an embodiment, the cleaning machine 100 can use facial recognition to classify bystanders and sort the bystanders into groups in order to show content to the bystander(s) that is relevant to a certain interest group or groups.

FIG. 2 is a perspective view of cleaning machine 200 with first display 202 and second display 204. In this embodiment, the cleaning machine 200 includes two displays. In other embodiments, the first display 202, second display 204, or a combination thereof can include a plurality of displays. As shown in FIG. 2, the cleaning machine 200 can also include a sensor 206.

In an embodiment, the cleaning machine 200 can be a ride-on type of machine configured to be operated by an operator positioned on or in cleaning machine 200. In other embodiments, the cleaning machine 200 can be a robotic or autonomous machine configured to be operated and/or driven without an operator in close proximity to cleaning machine 200.

The first display 202 can be mounted on a front of cleaning machine 200. In an embodiment, first display 202 can be mounted on the front of cleaning machine 200 with fixed brackets, sliders, or a combination thereof to slide in a higher or lower position (e.g., a lower position for storage and a higher position during use of cleaning machine 200).

The second display 204 can be mounted on a side of cleaning machine 200. In an embodiment, the second display 204 can be mounted on the side of cleaning machine 200 with fixed brackets, sliders, or a combination thereof to slide in a higher or lower position (e.g., a lower position for storage and a higher position during use of cleaning machine 200).

In an embodiment, the first display 202, second display 204, or a combination thereof can be disposed to rotate into a first vertical orientation, a second horizontal orientation, or any other angle along a range of 360 degrees.

In an embodiment, the first display 202, second display 204, or a combination thereof can include one or more displays stacked vertically, horizontally, or a combination thereof. Additionally, or alternatively, horizontally, or vertically configured sliders can be used to interchange and/or reposition display pieces.

In an embodiment, the first display 202, second display 204, or a combination thereof can include one or more flat screens, curved screens, or flexible screens that can wrap around a portion of cleaning machine 200.

In an embodiment, the first display 202, second display 204, or a combination thereof can include one or more physical ports, processors, transmitters, transceivers, and local storage devices, such as for use in areas without any wireless signal ability.

In an embodiment, first display 202, second display 204, or a combination thereof can communicate directly, or via a component of cleaning machine 200, wirelessly with an external communication device. For an example, the cleaning machine 200, first display 202, second display 204, or a combination thereof can connect to an online portal that will enable remote control of information, images, or a combination thereof displayed on first display 202, second display 204, or a combination thereof. Content can be "uploaded" to the cleaning machine 200 locally or remotely through wireless technology or via an internet connection.

In another embodiment, a video or data feed can be streamed (e.g., a delayed stream or a live stream) can also be displayed on first display 202, second display 204, or a combination thereof. For example, communication with remote assistance can occur via first display 202, second display 204, or a combination thereof.

In an embodiment, the first display 202, second display 204, or a combination thereof can be connected to an alarm system, to a national emergency service (e.g., online, or wirelessly), or to private/public authorities to guide and instruct people in case of an emergency. For example, first display 202, second display 204, or a combination thereof can show an exit route, current developments, or any other information useful to the people in proximity to cleaning machine 200.

In another embodiment, information displayed upon first display 202, second display 204, or a combination thereof could be relevant to the operating site. For example, in a market or store, a portion of first display 202, second display 204, or a combination thereof can present current offers, and another portion can show commercials for products. Additionally, or alternatively, a themed message (e.g., seasonal, holiday, etc.) can also be displayed in connection with occurrences of celebrations such as religious holidays, national holidays, or the like.

In an embodiment, the first display 202, second display 204, or a combination thereof can be grouped by different criteria in the portal, such as by a geographical region that cleaning machine 200 operates in, target customer groups, or any other criteria or information assignable to a target audience.

In an embodiment, the first display 202, second display 204, or a combination thereof can include one or more camera systems to detect and/or identify people in a vicinity of cleaning machine 200. For example, one or more camera systems can be integrated into first display 202, second display 204, or a combination thereof. Additionally, or alternatively, a camera can be externally mounted to first display 202 or second display 204. Likewise, cameras or sensors of cleaning machine 200 can be used to detect and/or identify people in a vicinity of cleaning machine 200.

In an embodiment, a component of (e.g., sensor 206) or connected to cleaning machine 200 can be configured to recognize objects and characteristics of such objects. For example, a processor connected to cleaning machine 200 can utilize an algorithm to scan an image, a video, or a combination thereof collected by cleaning machine 200 to determine a type, size, or other characteristic of an object that is nearby cleaning machine 200. In an embodiment, cleaning machine 200 can use facial recognition to classify bystanders and sort the bystanders into groups in order to show content to the bystander(s) that is relevant to a certain interest group or groups.

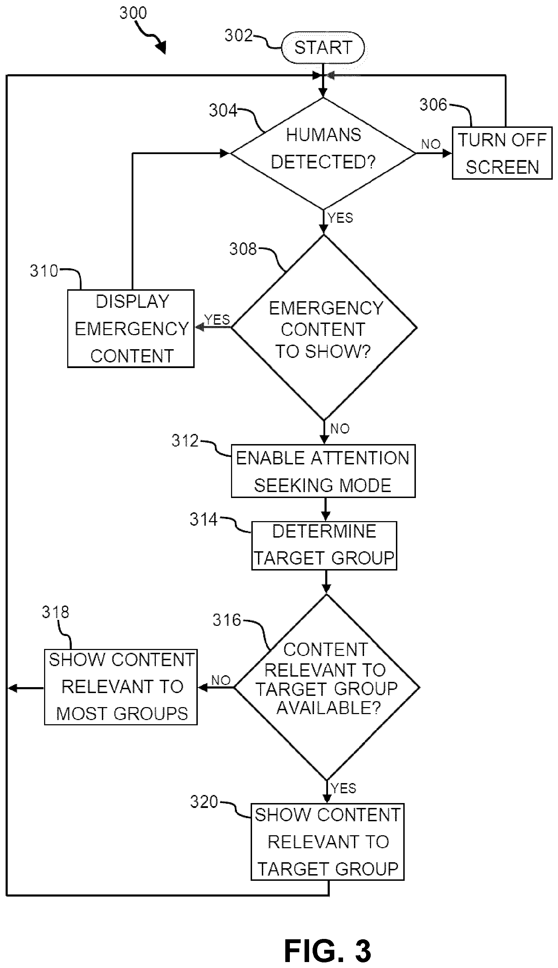

FIG. 3 is a flowchart of a method 300 of displaying content on a cleaning machine (e.g., cleaning machine 100 or cleaning machine 200). The method 300 can include steps 302-320.

Step 302 can include starting method 300. Step 304 can include detecting if a human or humans are present. If a human is not detected in step 304, then step 306 can be performed. Step 306 can include turning off a display screen to preserve power. After completion of step 306, the process can return to step 302 or step 304. If a human is detected in step 302, then the method can proceed to step 308.

Step 308 can include determining if there is emergency content to show. If there is emergency content to show, then the method can proceed to step 310. Step 310 can include displaying emergency content. After completion of step 310, the process can return to step 304. If there is not emergency content to show at step 308, step 312 can occur.

Step 312 can include enabling an "attention seeking" mode. Step 314 can include determining a target group. Step 316 can include determining if content relevant to the determined target group is available. If there is no content relevant to the determined target group is available in step 316, then step 318 can occur. Step 318 can include showing content relevant to most groups. After completion of step 318, the process can return to step 302 or 304. If content relevant to the determined target group is available in step 316, then step 320 can occur. Step 320 can include showing content that is relevant to the determined target group. After execution of step 320, method 300 can repeat or terminate.

The above detailed description includes references to the accompanying drawings, which form a part of the detailed description. The drawings show, by way of illustration, specific embodiments in which the disclosure can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

## Claims

1. A method (300) of operating a cleaning machine (100, 200) comprising a display, wherein the method comprises:
- determining a presence of a target individual or a target group;
- determining an availability of content relevant to the target individual and/or target group; and
- displaying, with the display (102, 104, 202, 204) of the cleaning machine (100, 200), the content relevant to the target individual and/or target group;
**characterized in that** the method further comprises:
- classifying a bystander to be a specific type of target individual or part of a specific type of target group; and
- showing content with the display (102, 104, 202, 204) of the cleaning machine (100, 200) to the bystander based on the performed classification of the bystander.

2. The method according to claim 1, wherein the method further comprises:
- determining if there is emergency information to show; and
- if so, showing the emergency information with the display (102, 104, 202, 204) of the cleaning machine (100, 200).

3. The method according to any one of the preceding claims, wherein the classification operation includes using the cleaning machine (100, 200) to perform facial recognition to classify a bystander or bystanders and sort the bystander(s) into groups in order to show content to the bystander(s) that is relevant to a certain target individual or target group.

4. The method according to any one of the preceding claims, the method further comprising:
- sorting bystanders into different target groups;
- determining which target group to prioritize; and
- showing content, with the display (102, 104, 202, 204) of the cleaning machine (100, 200), to the prioritized target group of bystanders.

5. The method according to any one of the preceding claims, the method further comprising:
- collecting, with the cleaning machine (100, 200), an image, a video, or a combination thereof;
- scanning, with an algorithm, the image, the video, or the combination thereof collected by the cleaning machine (100, 200); and
- determining, with a processor, a type or a size of an object that is nearby the cleaning machine (100, 200).

6. The method according to any one of the preceding claims, wherein the content relevant to the target individual and/or target group comprises sponsored information and advertisements and/or a themed message, e.g., for religious holidays, national holidays, or the like.

7. The method according to any one of the preceding claims, wherein the content relevant to the target individual and/or target group comprises a video or data feed.

8. A cleaning machine (100, 200) comprising:
- a sensor (106, 206) connected to the cleaning machine (100, 200), wherein the sensor (106, 206) is configured to recognize a target group, said target group comprising one or more persons;
- a database comprising content relevant to different target groups; and
- a display (102, 104, 202, 204) mounted to the cleaning machine (100, 200);
- a processor or a processing unit operatively connected to the display (102, 104, 202, 204), the processor or processing unit adapted for receiving data from the sensor (106, 206) about a recognized target group, said processor or a processing unit further configured for determining an availability of content relevant to the recognized target group and to present available content via said display (102, 104, 202, 204);
**characterized in that** the sensor (106, 206) or processor is configured to classify a bystander to be a specific type of target individual or part of a specific type of target group; and wherein the processor, based on the performed classification of the bystander, is configured to determine an availability of content relevant to the recognized target group and to present available content via said display (102, 104, 202, 204).

9. The cleaning machine (100, 200) according to claim 8, wherein the display (102, 104, 202, 204) is mounted to the cleaning machine (100, 200) with a bracket, a slider, or a combination thereof.

10. The cleaning machine (100, 200) according to any one of the claims 8-9, wherein the display (102, 104, 202, 204) is connected to an alarm system.

11. The cleaning machine (100, 200) according to any one of the claims 8-10, further comprising a camera system configured to detect people in a vicinity of the cleaning machine (100, 200).

12. The cleaning machine (100, 200) according to any one of the claims 8-11, wherein the display (102, 104, 202, 204) is connected to remote assistance.

13. The cleaning machine (100, 200) according to any one of the claims 8-12, wherein the display (102, 104, 202, 204) is connected to an online portal to enable remote control of information, an image, or a combination thereof displayed on the display (102, 104, 202, 204).

14. The cleaning machine (100, 200) according to any one of the claims 8-13, wherein the display (102, 104, 202, 204) is embodied as a first display (102, 202), and a second display (104, 204).

15. The cleaning machine (100, 200) according to any one of the claims 8-13, wherein the display (102, 104, 202, 204) is embodied as a first display (102, 202) mounted to a front of the cleaning machine (100, 200) and a second display (104, 204) mounted to a side of the cleaning machine (100, 200).

## Patentansprüche

1. Verfahren (300) zum Betreiben einer Reinigungsmaschine (100, 200), umfassend eine Anzeige, wobei das Verfahren umfasst:
- Bestimmen einer Anwesenheit eines Zielindividuums oder einer Zielgruppe;
- Bestimmen einer Verfügbarkeit von Inhalt, der für das Zielindividuum und/oder die Zielgruppe relevant ist; und
- Anzeigen, mit der Anzeige (102, 104, 202, 204) der Reinigungsmaschine (100, 200), des Inhalts, der für das Zielindividuum und/oder die Zielgruppe relevant ist;
**dadurch gekennzeichnet, dass** das Verfahren ferner umfasst:
- Klassifizieren eines Umstehenden als eine spezifische Art von Zielindividuum oder als Teil einer spezifischen Art von Zielgruppe; und
- Ausgeben von Inhalt mit der Anzeige (102, 104, 202, 204) der Reinigungsmaschine (100, 200) an den Umstehenden basierend auf der durchgeführten Klassifizierung des Umstehenden.

2. Verfahren nach Anspruch 1, wobei das Verfahren ferner umfasst:
- Bestimmen, ob Notfallinformationen auszugeben sind; und
- falls ja, Ausgeben der Notfallinformationen mit der Anzeige (102, 104, 202, 204) der Reinigungsmaschine (100, 200).

3. Verfahren nach einem der vorstehenden Ansprüche, wobei der Klassifizierungsvorgang ein Verwenden der Reinigungsmaschine (100, 200), um eine Gesichtserkennung durchzuführen, um einen Umstehenden oder Umstehende zu klassifizieren, und den/die Umstehenden in Gruppen zu sortieren, um Inhalt an den/die Umstehenden auszugeben, der für ein gewisses Zielindividuum oder eine gewisse Zielgruppe relevant ist, einschließt.

4. Verfahren nach einem der vorstehenden Ansprüche, das Verfahren ferner umfassend:
- Sortieren von Umstehenden in unterschiedliche Zielgruppen;
- Bestimmen, welche Zielgruppe zu priorisieren ist; und
- Ausgeben von Inhalt, mit der Anzeige (102, 104, 202, 204) der Reinigungsmaschine (100, 200), an die priorisierte Zielgruppe von Umstehenden.

5. Verfahren nach einem der vorstehenden Ansprüche, das Verfahren ferner umfassend:
- Erfassen, mit der Reinigungsmaschine (100, 200), eines Bilds, eines Videos oder einer Kombination davon;
- Abtasten, mit einem Algorithmus, des Bilds, des Videos oder der Kombination davon, die durch die Reinigungsmaschine (100, 200) erfasst werden; und
- Bestimmen, mit einem Prozessor, einer Art oder einer Größe eines Objekts, das in der Nähe der Reinigungsmaschine (100, 200) ist.

6. Verfahren nach einem der vorstehenden Ansprüche, wobei der Inhalt, der für das Zielindividuum und/oder die Zielgruppe relevant ist, gesponserte Informationen und Werbung und/oder eine thematische Nachricht, z. B. für religiöse Feiertage, nationale Feiertage oder dergleichen, umfasst.

7. Verfahren nach einem der vorstehenden Ansprüche, wobei der Inhalt, der für das Zielindividuum und/oder die Zielgruppe relevant ist, ein Video oder einen Datenfeed umfasst.

8. Reinigungsmaschine (100, 200), umfassend:
- einen Sensor (106, 206), der mit der Reinigungsmaschine (100, 200) verbunden ist, wobei der Sensor (106, 206) konfiguriert ist, um eine Zielgruppe zu erkennen, die Zielgruppe umfassend eine oder mehrere Personen;
- eine Datenbank, umfassend Inhalt, der für unterschiedliche Zielgruppen relevant ist; und
- eine Anzeige (102, 104, 202, 204), die an der Reinigungsmaschine (100, 200) angebracht ist;
- einen Prozessor oder eine Verarbeitungseinheit, die mit der Anzeige (102, 104, 202, 204) wirkverbunden sind, wobei der Prozessor oder die Verarbeitungseinheit zum Empfangen von Daten von dem Sensor (106, 206) über eine erkannte Zielgruppe angepasst ist, wobei der Prozessor oder eine Verarbeitungseinheit ferner zum Bestimmen einer Verfügbarkeit von Inhalt, der für die erkannte Zielgruppe relevant ist, und um verfügbaren Inhalt über die Anzeige (102, 104, 202, 204) darzustellen, konfiguriert ist;
**dadurch gekennzeichnet, dass** der Sensor (106, 206) oder der Prozessor konfiguriert ist, um einen Umstehenden als eine spezifische Art von Zielindividuum oder als Teil einer spezifischen Art von Zielgruppe zu klassifizieren; und wobei der Prozessor, basierend auf der durchgeführten Klassifizierung des Umstehenden, konfiguriert ist, um eine Verfügbarkeit von Inhalt, der für die erkannte Zielgruppe relevant ist, zu bestimmen, und um verfügbaren Inhalt über die Anzeige (102, 104, 202, 204) darzustellen.

9. Reinigungsmaschine (100, 200) nach Anspruch 8, wobei die Anzeige (102, 104, 202, 204) an der Reinigungsmaschine (100, 200) mit einer Halterung, einem Schieber oder einer Kombination davon angebracht ist.

10. Reinigungsmaschine (100, 200) nach einem der Ansprüche 8 bis 9, wobei die Anzeige (102, 104, 202, 204) mit einem Alarmsystem verbunden ist.

11. Reinigungsmaschine (100, 200) nach einem der Ansprüche 8 bis 10, ferner umfassend ein Kamerasystem, das konfiguriert ist, um Menschen in einer nahen Umgebung der Reinigungsmaschine (100, 200) zu detektieren.

12. Reinigungsmaschine (100, 200) nach einem der Ansprüche 8 bis 11, wobei die Anzeige (102, 104, 202, 204) mit einer Fernunterstützung verbunden ist.

13. Reinigungsmaschine (100, 200) nach einem der Ansprüche 8 bis 12, wobei die Anzeige (102, 104, 202, 204) mit einem Online-Portal verbunden ist, um eine Fernsteuerung von Informationen, einem Bild oder einer Kombination davon, die auf der Anzeige (102, 104, 202, 204) angezeigt werden, zu ermöglichen.

14. Reinigungsmaschine (100, 200) nach einem der Ansprüche 8 bis 13, wobei die Anzeige (102, 104, 202, 204) als eine erste Anzeige (102, 202) und eine zweite Anzeige (104, 204) ausgebildet ist.

15. Reinigungsmaschine (100, 200) nach einem der Ansprüche 8 bis 13, wobei die Anzeige (102, 104, 202, 204) als eine erste Anzeige (102, 202), die an einer Vorderseite der Reinigungsmaschine (100, 200) angebracht ist, und eine zweite Anzeige (104, 204), die an einer Seite der Reinigungsmaschine (100, 200) angebracht ist, ausgebildet ist.

## Revendications

1. Procédé (300) de fonctionnement d'une machine de nettoyage (100, 200) comprenant un affichage, dans lequel le procédé comprend :
- la détermination de la présence d'un individu cible ou d'un groupe cible ;
- la détermination de la disponibilité d'un contenu pertinent pour l'individu cible et/ou le groupe cible ; et
- l'affichage, sur l'affichage (102, 104, 202, 204) de la machine de nettoyage (100, 200), du contenu pertinent pour l'individu cible et/ou le groupe cible ;
**caractérisé en ce que** le procédé comprend en outre :
- le classement d'un observateur comme un type spécifique d'individu cible ou faisant partie d'un type spécifique de groupe cible ; et
- la présentation d'un contenu sur l'affichage (102, 104, 202, 204) de la machine de nettoyage (100, 200) à l'observateur sur la base de la classification effectuée de l'observateur.

2. Procédé selon la revendication 1, dans lequel le procédé comprend en outre :
- la détermination du fait qu'il y a des informations d'urgence à afficher ; et
- si oui, l'affichage des informations d'urgence sur l'affichage (102, 104, 202, 204) de la machine de nettoyage (100, 200).

3. Procédé selon l'une quelconque des revendications précédentes, dans lequel l'opération de classification comporte l'utilisation de la machine de nettoyage (100, 200) pour effectuer une reconnaissance faciale afin de classer un ou plusieurs observateurs et de trier le ou les observateurs en groupes afin de montrer à l'observateur ou aux observateurs un contenu pertinent pour un individu cible ou un groupe cible donnés.

4. Procédé selon l'une quelconque des revendications précédentes, le procédé comprenant en outre :
- le tri des observateurs en différents groupes cibles ;
- la détermination du groupe cible à privilégier ; et
- la présentation d'un contenu, avec l'affichage (102, 104, 202, 204) de la machine de nettoyage (100, 200), au groupe cible prioritaire d'observateurs.

5. Procédé selon l'une quelconque des revendications précédentes, le procédé comprenant en outre :
- la collecte, à l'aide de la machine de nettoyage (100, 200), d'une image, d'une vidéo ou d'une combinaison de celles-ci ;
- le balayage, avec un algorithme, de l'image, de la vidéo ou de la combinaison de ceux-ci collectés par la machine de nettoyage (100, 200) ; et
- la détermination, à l'aide d'un processeur, d'un type ou d'une taille d'un objet qui se trouve à proximité de la machine de nettoyage (100, 200).

6. Procédé selon l'une quelconque des revendications précédentes, dans lequel le contenu pertinent pour l'individu cible et/ou le groupe cible comprend des informations et des publicités sponsorisées et/ou un message thématique, par exemple, pour des fêtes religieuses, des fêtes nationales, ou similaires.

7. Procédé selon l'une quelconque des revendications précédentes, dans lequel le contenu pertinent pour l'individu cible et/ou le groupe cible comprend un flux de vidéos ou de données.

8. Machine de nettoyage (100, 200) comprenant :
- un capteur (106, 206) connecté à la machine de nettoyage (100, 200), dans lequel le capteur (106, 206) est configuré pour reconnaître un groupe cible, ledit groupe cible comprenant une ou plusieurs personnes ;
- une base de données comprenant des contenus pertinents pour différents groupes cibles ; et
- un affichage (102, 104, 202, 204) monté sur la machine de nettoyage (100, 200) ;
- un processeur ou une unité de traitement connecté(e) fonctionnellement à l'affichage (102, 104, 202, 204), le processeur ou l'unité de traitement étant adapté(e) à recevoir des données provenant du capteur (106, 206) concernant un groupe cible reconnu, ledit processeur ou une unité de traitement étant en outre configuré(e) pour déterminer une disponibilité d'un contenu pertinent pour le groupe cible reconnu et pour présenter un contenu disponible par l'intermédiaire dudit affichage (102, 104, 202, 204) ;
**caractérisée en ce que** le capteur (106, 206) ou le processeur est configuré pour classer un observateur en tant que type spécifique d'individu cible ou faisant partie d'un type spécifique de groupe cible ; et dans laquelle le processeur, sur la base de la classification effectuée de l'observateur, est configuré pour déterminer une disponibilité de contenu pertinent pour le groupe cible reconnu et pour présenter le contenu disponible par l'intermédiaire dudit affichage (102, 104, 202, 204).

9. Machine de nettoyage (100, 200) selon la revendication 8, dans laquelle l'affichage (102, 104, 202, 204) est monté sur la machine de nettoyage (100, 200) à l'aide d'un support, d'un curseur ou d'une combinaison de ceux-ci.

10. Machine de nettoyage (100, 200) selon l'une quelconque des revendications 8 à 9, dans laquelle l'affichage (102, 104, 202, 204) est connecté à un système d'alarme.

11. Machine de nettoyage (100, 200) selon l'une quelconque des revendications 8 à 10, comprenant en outre un système de caméra configuré pour détecter des personnes se trouvant à proximité de la machine de nettoyage (100, 200).

12. Machine de nettoyage (100, 200) selon l'une quelconque des revendications 8 à 11, dans laquelle l'affichage (102, 104, 202, 204) est connecté à une assistance à distance.

13. Machine de nettoyage (100, 200) selon l'une quelconque des revendications 8 à 12, dans laquelle l'affichage (102, 104, 202, 204) est connecté à un portail en ligne pour permettre le contrôle à distance d'informations, d'une image, ou d'une combinaison de ceux-ci affichés sur l'affichage (102, 104, 202, 204).

14. Machine de nettoyage (100, 200) selon l'une quelconque des revendications 8 à 13, dans laquelle l'affichage (102, 104, 202, 204) est constitué d'un premier affichage (102, 202) et d'un second affichage (104, 204).

15. Machine de nettoyage (100, 200) selon l'une quelconque des revendications 8 à 13, dans laquelle l'affichage (102, 104, 202, 204) se présente sous la forme d'un premier affichage (102, 202) monté sur un avant de la machine de nettoyage (100, 200) et d'un second affichage (104, 204) monté sur un côté de la machine de nettoyage (100, 200).
